# EUROPÄISCHE PATENTANMELDUNG

(11) **EP 2 317 289 A2**
(43) Veröffentlichungstag der Anmeldung: **04.05.2011**
(21) Anmeldenummer: 10014077.1
(22) Anmeldetag: 28.10.2010
(51) Int. Cl.: G01F 23/72

(54) **Vorrichtung und Verfahren zur Feststellung der Existenz wenigstens einer Phasengrenze zwischen übereinander geschichteten Fluiden**

(30) Priorität: 29.10.2009 DE 102009051165
(71) Anmelder: De Rosa, Günter, 67067 Ludwigshafen (DE); Fleck, Albert, 67067 Ludwigshafen (DE)
(72) Erfinder: De Rosa, Günter, 67067 Ludwigshafen (DE); Fleck, Albert, 67067 Ludwigshafen (DE)
(74) Vertreter: Schmitt, Meinrad

(57) **Zusammenfassung**

Es werden eine Vorrichtung und ein Verfahren zur Feststellung der Existenz wenigstens einer Phasengrenze (8, 9) zwischen übereinander geschichteten Fluiden (4, 5) offenbart. Die Vorrichtung umfasst einen Verdrängungskörper (10), der einen Teil (16) eines elektrischen, insbesondere elektromagnetischen Linearantriebs zur Krafteinwirkung auf den Verdrängungskörper (10) aufweist, und ein Führungselement (12), entlang dessen der Verdrängungskörper (10) durch die übereinander geschichteten Fluide (4, 5) unter Passage wenigstens einer Phasengrenze (8, 9) hindurch bewegbar ist. Der stationäre Teil (20) des Linearantriebs ist dem Führungselement (12) zugeordnet. Die Vorrichtung gelangt in einem entsprechenden Verfahren zum Einsatz. Der Arbeitspunkt des Verdrängungskörpers (10) ist erfindungsgemäß durch Wahl der einwirkenden Zusatzkraft einstellbar. Es kann eine Mehrzahl von Phasengrenzen (8, 9) zwischen übereinander geschichteten Fluiden mit nur einem Verdrängungskörper (10) gemessen werden.

## Beschreibung

Die Erfindung betrifft eine Vorrichtung zur Feststellung der Existenz wenigstens einer Phasengrenze zwischen übereinander geschichteten Fluiden gemäß dem Oberbegriff des Patentanspruchs 1. Des Weiteren betrifft die Erfindung ein Verfahren zur Feststellung der Existenz wenigstens einer Phasengrenze zwischen übereinander geschichteten Fluiden gemäß dem Oberbegriff des Patentanspruchs 10.

In einer Vielzahl von industriellen Anwendungen, beispielsweise in der chemischen Produktionstechnik, ist es erforderlich, den Höhenstand eines Fluids, insbesondere einer Flüssigkeit oder eines Gases, in einem Behälter zu bestimmen. Bei den in konkreten Situationen vorherrschenden Umgebungsbedingungen hat es sich in der Praxis bewährt, so genannte Schwimmer oder Verdrängungskörper einzusetzen, welche bezüglich der physikalischen Parameter wie ihrer Masse und ihrem Volumen sowie dem spezifischen Gewicht - beziehungsweise der Dichte - des bestimmten Fluids derart ausgeführt sind, dass sie in diesem Fluid schwimmen, während sie im darüber befindlichen Fluid sinken. Ein derart angepasster Verdrängungskörper hat offensichtlich nur einen vorgesehenen Arbeitspunkt, so dass in typischen Situationen in der Praxis auch nur die Grenzfläche oder Phasengrenze des zugeordneten Fluids ermittelt werden kann.

Es ist des Weiteren auch bereits bekannt, bei Füllstandsmessgeräten eine Ausgleichseinrichtung vorzusehen, mittels derer die in einem Fluid um einen auf einen Verdrängungskörper wirkender Auftrieb verminderte Gewichtskraft eines Verdrängungskörpers kompensiert werden kann. Im Dokument DE 25 44 038 ist ein Füllstandsmessgerät mit einem an einem Draht hängenden Schwimmer offenbart. Der Draht ist an einer mit einem Anzeigegerät gekoppelten Aufwickeltrommel befestigt, wobei die Aufwickeltrommel mit einer Scheibe gekoppelt ist, welche durch das magnetische Feld eines Linearmotors geführt ist, dessen tangential wirkende einstellbare Zugkraft die erforderlich Ausgleichskraft aufbringt. lm Betriebszustand ist der Linearmotor auf eine konstante Zugkraft eingestellt, die geringfügig unter der Gewichtskraft des Schwimmers liegt.

Aufgabe der vorliegenden Erfindung ist es, eine Mehrzahl von Phasengrenzen zwischen übereinander geschichteten Fluiden mit nur einem Verdrängungskörper zu messen. Es sollen die Höhen der jeweiligen Fluiden und/oder deren jeweilige Dichte mit dem einzigen Verdrängungskörper und/oder Schwimmer gemessen werden. Die Vorrichtung soll einen einfachen und gleichwohl funktionssicheren Aufbau aufweisen und das Verfahren soll eine zuverlässige Messung in einfacher Weise ermöglichen. Weiterhin sollen die Vorrichtung und/oder das Verfahren zusätzlich oder alternativ die Feststellung beliebig verschiedener Mediumschichten in unterschiedlichen Tauchtiefen ermöglichen.

Diese Aufgabe wird erfindungsgemäß durch eine Vorrichtung zur Feststellung der Existenz wenigstens einer Phasengrenze zwischen übereinander geschichteten Fluiden mit den Merkmalen gemäß Patentanspruch 1 und/oder durch ein Verfahren zur Feststellung der Existenz wenigstens einer Phasengrenze zwischen übereinander geschichteten Fluiden mit den Merkmalen gemäß Patentanspruch 10 gelöst. Vorteilhafte Weiterbildungen der Erfindung sind in den abhängigen Ansprüchen charakterisiert.

Die erfindungsgemäße Vorrichtung zur Feststellung der Existenz wenigstens einer Phasengrenze zwischen übereinander geschichteten und/oder aneinander grenzenden Fluiden umfasst einen Verdrängungskörper und ein Führungselement, entlang dessen der Verdrängungskörper durch die übereinander geschichteten Fluide unter Passage wenigstens einer Phasengrenze hindurch bewegbar ist. Der Verdrängungskörper weist erfindungsgemäß einen bewegbaren Teil eines elektrischen, insbesondere elektromagnetischen Linearantriebs zur Krafteinwirkung auf den Verdrängungskörper auf, während der stationäre Teil oder Stator des Linearantriebs dem Führungselement zugeordnet ist. Erfindungsgemäß ist der Verdrängungskörper elektrisch angetrieben und bildet grundsätzlich den Anker des Linearantriebs und/oder Linearmotors. Der stationäre Teil oder Stator des Linearantriebs mit der primären Elektrowicklung befindet sich in oder auf dem festmontierten Führungselement, welches bevorzugt als ein Führungsrohr ausgebildet ist. Das Gewicht des Verdrängungskörpers oder Schwimmers im Verhältnis zu dem oder bezogen auf das Fluid kann somit beliebig geändert und/oder eingestellt werden, wobei hier vor allem auf den Antriebs- oder Motorstrom verwiesen sei.

Eine Phasengrenze kann auch als Grenzfläche oder als Trennschicht bezeichnet werden. Im Zusammenhang der Erfindung ist mit dem Begriff einer Phasengrenze zwar bevorzugt nur die zwischen zwei Fluiden ausgebildete Grenzfläche, der ideale Fall, bezeichnet; es kann aber auch im Hinblick auf die Praxis mit einer Phasengrenze bereits derjenige Übergangsbereich zwischen zwei Fluiden verstanden werden, in welchem die zwei Fluide nicht emulsionsfrei voneinander getrennt sind.

Auf diese Weise kann erfindungsgemäß der Gewichtskraft des Verdrängungskörpers und der Auftriebskraft in den den Verdrängungskörper umgebenden Fluiden in vorteilhafter Weise eine Zusatzkraft überlagert werden. In verschiedenen Fluiden, auch allgemeiner in einer Umgebung unterschiedlicher Dichte, erfährt der Verdrängungskörper Auftriebskräfte verschiedene Stärke, so dass für eine bestimmte Gesamtkraft, beispielsweise für ein Kräftegleichgewicht oder einen konstanten Vortrieb, jeweils verschieden starke Zusatzkräfte notwendig sind. Der Arbeitspunkt des Verdrängungskörpers ist erfindungsgemäß durch Wahl der einwirkenden Zusatzkraft einstellbar. Die Krafteinwirkung ist insbesondere direkt.

Die Feststellung der Existenz wenigstens einer Phasengrenze kann zunächst qualitativ sein; sie kann aber insoweit auch quantitativ sein, als eine quantitative Veränderung einer Messgröße beim Hindurchbewegen des Verdrängungskörpers auftritt. Dabei kann vom Auftreten der Veränderung qualitativ auf das Vorhandensein der Phasengrenze geschlossen werden und bei entsprechender vorhergehender Kalibration aus der Größe der Veränderung auch auf die Art des Fluids, insbesondere der Flüssigkeit geschlossen werden.

Ein Fluid kann eine Flüssigkeit oder ein Gas sein. Die übereinander geschichteten Fluide sind insbesondere verschieden voneinander und/oder nicht mischbar und/oder nicht ineinander lösbar und/oder gesättigt gemischt und/oder gesättigt gelöst. Die erfindungsgemäße Vorrichtung kann eine Messeinrichtung und/oder eine Anzeigeeinrichtung und/oder eine Auswerteeinheit einer Messgröße, die in durch eine Phasengrenze getrennten Bereichen der übereinander geschichteten Fluide unterschiedliche quantitative Werte aufweist, umfassen. Der Verlauf des Führungselements kann insbesondere im Wesentlichen vertikal orientiert sein. Das Führungselement kann insbesondere eine Linearführung sein. Der bewegbare Teil des insbesondere elektromagnetischen Linearantriebs kann im Inneren des Verdrängungskörpers aufgenommen oder integriert sein. Der weitere oder stationäre Teil des elektromagnetischen Linearantriebs kann vom Führungselement umfasst sein. Der vom Verdrängungskörper umfasste Teil und der weitere Teil zusammen bilden den vollständigen elektrischen Linearantrieb. Anders gesagt, die erfindungsgemäße Vorrichtung umfasst einen elektrischen Linearantrieb, dessen Läufer oder Anker dem Verdrängungskörper zugeordnet und insbesondere in diesen integriert ist und dessen stationärer Teil oder Stator dem Führungselement zugeordnet und insbesondere in dieses integriert ist.

Die erfindungsgemäße Vorrichtung kann des Weiteren eine Energieversorgungseinrichtung und/oder eine Steuerungseinheit für den Linearantrieb aufweisen. Anders gesagt, der insbesondere elektromagnetische Linearantrieb kann steuerbar und/oder regelbar sein. Der Verdrängungskörper kann auch als Schwimmer bezeichnet werden. Der Verdrängungskörper kann insbesondere derart ausgeführt sein, dass er in keinem oder in nur dem untersten der übereinander geschichteten Fluide schwimmt. Die Gewichtskraft ist größer als die Auftriebskraft im jeweiligen Fluid. Diese Ausführungsform ist unter anderem insoweit bevorzugt, als aufgrund der industriellen Anwendungen verbreitet ein stabiler Verdrängungskörper mit dicker Wandung zum Einsatz gelangt, der einen geringen Auftrieb aufweist. Alternativ zu dieser bevorzugten Ausführungsform kann der Verdrängungskörper dagegen derart ausgeführt sein, dass er in einer Mehrzahl von übereinander geschichteten Fluiden schwimmt - die jeweilige Auftriebskraft ist größer als die Gewichtskraft-, wobei der elektromagnetische Linearantrieb zur Erzeugung einer Eintauchkraft genutzt wird, damit der Verdrängungskörper durch die resultierende Gesamtkraft in die besagten Fluide hineingedrückt wird.

Der elektrische Linearantrieb kann mit elektromagnetischen oder einem elektrodynamischen Wirkprinzip (bevorzugt) oder alternativ dazu mit einem piezoelektrischen, einem elektrostatischem, einem magnetostatischen, einem magnetostriktiven oder einem thermoelektrischen Wirkprinzip arbeiten.

In einer bevorzugten Ausführungsform der erfindungsgemäßen Vorrichtung ist der elektromagnetische Linearantrieb ein Linearmotor, wobei das Führungselement einen Stator des Linearmotors aufweist, der entlang des Verlaufs des Führungselements angeordnet ist, und der Teil des elektromagnetischen Linearantriebs des Verdrängungskörpers ein Läuferteil des Linearmotors ist. Mit anderen Worten, der Verdrängungskörper umfasst den Anker eines Linearmotors, während der Stator mit der primären Elektrowicklung dem Führungselement zugeordnet ist. Der Linearmotor kann auch als Wanderfeldmotor bezeichnet werden. Die Krafteinwirkung auf den Verdrängungskörper kann insbesondere einstellbar und/oder vorgebbar und/oder veränderbar sein. Eine Veränderung der Stärke der Kraftwirkung auf den Verdrängungskörper kann insbesondere mittels einer Variation der Stärke oder des Betrags der Amplitude des Motorstromes des Linearmotors bewirkt werden.

Das Läuferteil des Linearmotors kann wenigstens einen Permanentmagneten aufweisen. Der Permanentmagnet kann beispielsweise, ein Eisenferrit (bevorzugt), ein Neodym-Eisen-Bor-Magnet (NdFeB) oder ein Kobalt-Samarium-Magnet (CoSm) sein. Des Weiteren oder alternativ dazu kann der Linearmotor ein Drehstrommotor und/oder ein Schrittmotor sein. In der Ausführung als Drehstrommotor kann der Linearmotor eine Drehstrom-Synchronmaschine oder eine Drehstrom-Asynchronmachine sein. Dem Linearmotor können wenigstens ein Positionsgeber und/oder ein Encoder zugeordnet sein.

In einer Weiterbildung umfasst die erfindungsgemäße Vorrichtung eine Einrichtung zur Bestimmung der Position des Verdrängungskörpers, so dass eine Lagemessung der wenigstens einen Phasengrenze ermöglicht ist. In konkreten Ausführungsformen kann die Einrichtung zur Bestimmung der Position des Verdrängungskörpers wenigstens ein Messgerät, insbesondere einen Ultraschallsender und/oder einen Ultraschallempfänger, wenigstens einen magnetostriktiven Sensor oder wenigstens einen kapazitiven Sensor aufweisen. Bevorzugt kann die Einrichtung zur Bestimmung der Position des Verdrängungskörpers einen Rechner umfassen, in dessen Speicher ein Softwareprogramm abgelegt ist, durch welches Signale des wenigstens einen Messgeräts ausgewertet werden.

Allgemeiner als nur im Hinblick auf die Feststellung der Existenz von Phasengrenzen, welche allerdings eine besonders hohe Relevanz für die Praxis in industriellen Anlagen hat, kann die erfindungsgemäße Vorrichtung aber auch zur Feststellung von Fluidbereichen unterschiedlicher Dichte oder Wichte zum Einsatz gelangen, ohne dass Phasengrenzen oder Grenzflächen zwischen diesen Fluidbereichen ausgebildet sind. Die erfindungsgemäße Vorrichtung kann in einer Weiterbildung in anderer Hinsicht auch eine Einrichtung zur Bestimmung der Dichte beziehungsweise des spezifischen Gewichts (Wichte) des den Verdrängungskörper umgebenden Fluids umfassen. Insbesondere kann aus der für ein Kraftgleichgewicht oder einen bestimmten Vortrieb des Verdrängungskörpers notwendigen Größe der Krafteinwirkung mittels des elektromagnetischen Linearantriebs unter Berücksichtigung der physikalischen Parameter des Verdrängungskörpers und/oder seiner Umgebung die Dichte beziehungsweise Wichte quantitativ bestimmt werden. Durch einen Vergleich mit bekannten Werten kann auch auf die Art des Fluids geschlossen werden. Bevorzugt kann die Einrichtung zur Bestimmung der Dichte einen Rechner umfassen, in dessen Speicher ein Softwareprogramm abgelegt ist, durch welches die beschriebenen Verfahrensschritte auf dem Rechner ausgeführt werden.

Aufgrund der besonderen vorherrschenden Umgebungsbedingungen in einer Vielzahl von industriellen Anwendungen ist es vorteilhaft, wenn der Verdrängungskörper und/oder das Führungselement der erfindungsgemäßen Vorrichtung druckgeschützt und/oder temperaturgeschützt sind. In typische Anwendung der erfindungsgemäßen Vorrichtung ist ein Druck bis 380 bar vorgesehen, so dass die Vorrichtung entsprechend durch eine robuste Ausführung zu schützen ist. Für den Verdrängungskörper und/oder das Führungselement ist in diesem Zusammenhang als Material ein Edelstahl oder Titan bevorzugt. Das Führungselement kann insbesondere nahtlos sein. Die erfindungsgemäße Vorrichtung kann einem weiten Temperaturbereich von -250 Grad bis 300 Grad ausgesetzt sein. Insbesondere können für eine Beständigkeit gegen hohe Temperaturen im elektromagnetischen Linearantrieb teflonbeschichtete Drähte eingesetzt werden.

In einer bevorzugten Ausführungsform der erfindungsgemäßen Vorrichtung umfasst das Führungselement ein Führungsrohr und/oder umschließt der Verdrängungskörper wenigstens teilweise das Führungselement, bevorzugt das Führungsrohr. Das Führungsrohr kann insbesondere nahtlos sein.

Im Zusammenhang des erfinderischen Gedankens steht auch ein Verfahren zur Feststellung der Existenz wenigstens einer Phasengrenze zwischen übereinander geschichteten Fluiden, in welchem ein Verdrängungskörper entlang eines Führungselements durch die übereinander geschichteten Fluide unter Passage wenigstens einer Phasengrenze hindurch bewegt wird. Dabei wird erfindungsgemäß mit einer durch einen elektromagnetischen Linearantrieb, von dem ein Teil vom Verdrängungskörper umfasst ist, aufgebrachten Kraft auf den Verdrängungskörper eingewirkt. Insbesondere kann zur Durchführung des erfindungsgemäßen Verfahrens eine erfindungsgemäße Vorrichtung mit Merkmalen oder Merkmalskombinationen gemäß dieser Darstellung eingesetzt werden. Die mittels des elektromagnetischen Linearantriebs aufgebrachte Kraft kann in ihrer Stärke einstellbar oder steuerbar oder regelbar sein.

Mit anderen Worten, erfindungsgemäß ist ein Verdrängungskörper mittels des elektrischen, insbesondere elektromagnetischen oder Linienmotors oder Linearantriebs durch die übereinander geschichteten Fluide bewegbar beziehungsweise auf den Verdrängungskörper kann mittels des bevorzugt elektromagnetischen Antriebs eine Zusatzkraft, insbesondere zusätzlich zur Gewichtskraft und zur Auftriebskraft, beaufschlagt werden. Durch Änderung der Auftriebskraft des Verdrängungskörpers oder Schwimmers beim Durchfahren verschiedener Phasengrenzen oder Trennschichten ändern sich die elektrischen Parameter des Linearantriebs, insbesondere der Strom und/oder die Spannung. Somit können beliebig verschiedene Dichten der Fluide in unterschiedlichen Tauchtiefen festgestellt werden. Durch Vergleich mit zuvor gemessenen und/oder festgelegten Werten, insbesondere elektrischen Werten, können somit Aussagen über die jeweilige Dichte und/oder Art des Fluids gemacht werden. In Verbindung mit der Bestimmung oder Messung der Position des Verdrängungskörpers können ebenso die Höhen und/oder Abstände der Phasengrenzen und/oder der verschiedenen Fluide gemessen und/oder bestimmt werden.

In einer Weiterbildung des erfindungsgemäßen Verfahrens wird auch die Position des Verdrängungskörpers bestimmt, so dass eine Lagemessung der Phasengrenze erreicht werden kann. Des Weiteren oder alternativ dazu kann die Dichte beziehungsweise das spezifischen Gewicht (Wichte) des den Verdrängungskörper umgebenden Fluids bestimmt werden.

In einer Ausführungsform des erfindungsgemäßen Verfahrens wird aus einer Veränderung der vom elektrischen oder elektromechanischen oder elektromagnetischen Linearantrieb für die Erzeugung einer bestimmten Gesamtkraft, beispielsweise für das hydrostatische Gleichgewicht des Verdrängungskörpers im Fluid aufzubringenden Kraft, auf die Existenz einer Phasengrenze in einem bestimmten Positionsintervall des Verdrängungskörpers geschlossen. Aus der Stärke der aufzubringen Kraft kann die Dichte des umgebenden Fluids bestimmt werden. Anders gesagt, aus einer Feststellung einer ersten Stärke der aufzubringenden Kraft an einer ersten Position des Verdrängungskörpers und einer zweiten, von der ersten verschiedenen Stärke der aufzubringenden Kraft an einer zweiten Position des Verdrängungskörpers kann auf die Existenz einer Phasengrenze zwischen den beiden Positionen des Verdrängungskörpers geschlossen werden.

In einer anderen Ausführungsform des erfindungsgemäßen Verfahrens wird ein fester Arbeitspunkt des Verdrängungskörpers mittels einer durch den elektrischen oder elektromagnetischen oder elektromechanischen Linearantrieb aufgebrachten Zusatzkraft eingestellt und der Verdrängungskörper wird für die Messung in den übereinander geschichteten Fluiden frei beweglich schwimmen beziehungsweise tauchen gelassen. Bei oder nach der Feststellung einer stationären Position des Verdrängungskörpers wird auf die Existenz einer Phasengrenze bei dieser Position des Verdrängungskörpers geschlossen. Das Erreichen einer stationären Position kann dadurch festgestellt werden, dass der beobachtete oder erfasste Messwert der Position des Verdrängungskörpers im Wesentlichen unverändert bleibt.

Des Weiteren oder alternativ dazu kann im erfindungsgemäßen Verfahren die Position des Verdrängungskörpers mittels einer Messung der Position des vom Verdrängungskörper umfassten Teils des elektromagnetischen Linearantriebs bestimmt werden.

Anders gesagt, können mit der erfindungsgemäßen Vorrichtung beziehungsweise dem erfindungsgemäßen Verfahren in einem Behälter die anteiligen Füllstandhöhen von Fluiden mit unterschiedlichen Dichten, welche insbesondere aufeinander geschichtete Phasengrenzen ausgebildet haben, mittels des positionsabhängigen Auftriebs des Verdrängungskörpers ermittelt werden.

Die in dieser Darstellung beschriebenen Merkmale können einzeln, in Kombinationen einzelner Merkmale oder alle gemeinsam in einer erfindungsgemäßen Vorrichtung oder einem erfindungsgemäßen Verfahren verwirklicht sein.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine schematische Darstellung einer bevorzugten Ausführungs- form einer erfindungsgemäßen Vorrichtung in einem Behälter mit einer Mehrzahl von übereinander geschichteten Fluiden, und
- Figur 2: ein Detail der bevorzugten Ausführungsform der erfindungsgemä- ßen Vorrichtung: Verdrängungskörper und Führungsrohr sowie Baugrup- pen eines integrierten Linearmotors.

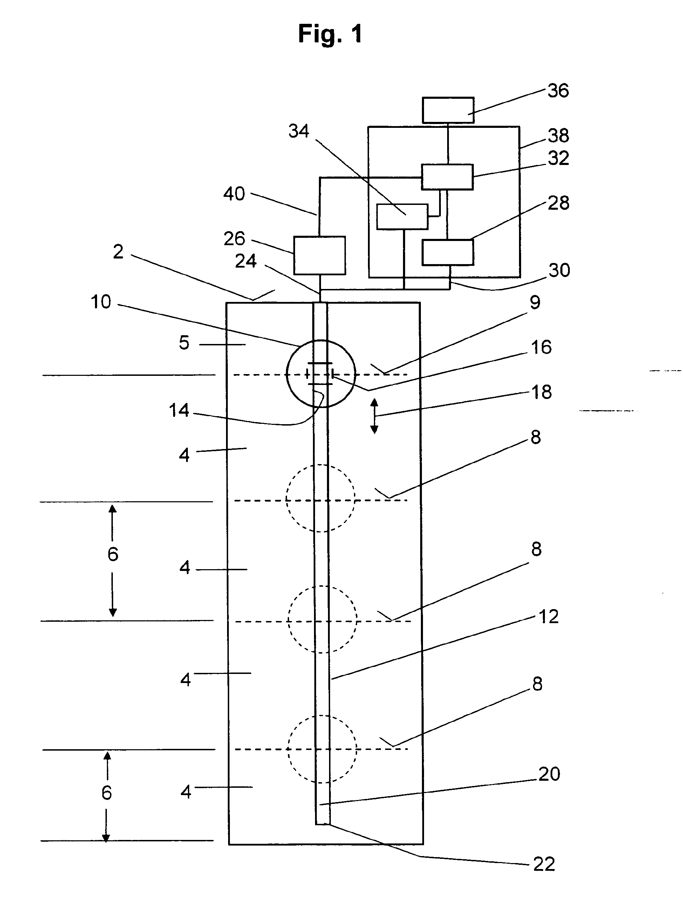

Die Figur 1 zeigt schematisch eine bevorzugte Ausführungsform einer erfindungsgemäßen Vorrichtung in einem Behälter 2 mit einer Mehrzahl von übereinander geschichteten Fluiden 4, welche die Höhen 6 aufweisen. Es sind hier beispielshaft vier übereinander geschichtete Fluide, beispielshaft vier Flüssigkeiten, schematisch dargestellt, welche jeweils Trennschichten oder Phasengrenzen 8 zwischeneiander ausgebildet haben. Die Oberfläche 9 des obersten Fluids 4 bzw. der obersten Flüssigkeit bildet die Trennschicht oder Phasengrenze zu einem weiteren gasförmigen Fluid 5, nämlich Luft. Die Vorrichtung umfasst einen Verdrängungskörper 10 und ein als Führungsrohr 12 ausgebildetes Führungselement, an dem der Verdrängungskörper 10 bewegbar entlang des Verlaufs des Führungsrohrs 12 aufgenommen ist. In dieser Ausführungsform ist der Verdrängungskörper 10 im Wesentlichen kugelförmig, wobei er eine zentrale, durchgehende Öffnung 14 aufweist. Der Verdrängungskörper 10 weist damit die Topologie eines Torus auf. Die zentrale Öffnung 14 ist bevorzugt im Wesentlichen zylinderförmig ausgeführt, wobei das Führungsrohr 12 insbesondere eine im Wesentlichen zylindrische Außenfläche aufweist. Durch die zentrale Öffnung 14 verläuft das Führungsrohr 12. In dieser Ausführungsform umschließt der Verdrängungskörper 10 das Führungsrohr 12 vollständig. Alternativ kann im Rahmen der Erfindung der Verdrängungskörper 10 das Führungselement nur teilweise derart umgreifen, dass gleichwohl eine die Bewegung ermöglichende Führung sicher gestellt ist.

Der Verdrängungskörper weist erfindungsgemäß einen Teil 16 eines elektrischen, insbesondere elektromagnetischen Linearantriebs auf. Das Führungsrohr 12 ist senkrecht orientiert im Behälter 2 angeordnet, so dass der Verdrängungskörper 10 verschiedene Höhen bei Verschiebung oder Translation entlang des Führungsrohrs 12 erreichen kann, wie mit dem Doppelpfeil 18 angedeutet. Im Inneren des Führungsrohrs 12 ist der Stator 20 des Linearantriebs angeordnet. Das über den Umfang fluiddicht geschlossene Führungsrohr 12 ist auch am unteren Ende fluiddicht geschlossen, insbesondere mittels eines Bodens 22, so dass der im Inneren angeordnete Stator 20 in bevorzugter Weise sicher von den Fluiden 4 geschützt ist. Mittels des erfindungsgemäßen elektromagnetischen Linearantriebs kann eine Kraft auf den Verdrängungskörper 10 derart ausgeübt werden, dass dieser entlang des Führungsrohrs 12 bewegt wird. Es ist ferner von Bedeutung, dass das Führungsrohr bzw. das Führungselement 12 aus einem im Wesentlichen nicht magnetisierbaren bzw. nicht paramagnetisch oder nicht ferromagnetischen Werkstoffe bestehen. Auch für den Verdrängungskörper 10, zumindest aber im Bereich von dort vorgesehenen Magneten, ist ein derartiger Werkstoff vorgesehen.

Einzelne Positionen des Verdrängungskörpers 10 bei einer vom elektromagnetischen Linearantrieb aufgebrachten Zusatzkraft unterschiedlicher Stärke derart, dass der Verdrängungskörper 10 jeweils in einem bestimmten Fluid 4 schwimmt, sind durch gestrichelte Kreislinien angedeutet. Als illustratives Beispiel sei hier die Abfolge der folgenden Fluide 4 von unten nach oben genannt: Wasser (relative Dichte 1,0), ein Öl (relative Dichte 0,91), Tetrachlorethen (Perchlor, relative Dichte 0,65), Dichlorethylen (relative Dichte 0,45) und Luft.

Am oberen Ende des im Übrigen geschlossen ausgebildeten Führungsrohrs 12 sind die elektrischen Anschlussleitungen 24 des Stators 20 herausgeführt. Über die elektrischen Anschlussleitungen 24 sind Spulen des Stators 20 mit einer elektrischen Energie-Versorgungseinrichtung 26 verbunden, welche auch als Steuerungseinheit ausgebildet ist oder enthält oder an eine solche angeschlossen ist. Weiterhin ist eine Messeinrichtung 28 für elektrische Parameter, insbesondere Strom und/oder Spannung, des Linearantriebs vorgesehen, wobei die Messeinrichtung 28 über eine elektrische Leitung 30 mit den elektrischen Anschlussleitungen 24 und/oder der Versorgungseinrichtung 26 verbunden, welche insbesondere als eine Strom- und/oder Spannungs-Versorgungseinheit ausgebildet ist. Ferner ist eine Auswerteeinheit 32 für die relevanten gemessenen elektrischen Parameter vorgesehen ebenso wie eine Einrichtung 34 zur Positionsbestimmung des Verdrängungskörpers 10. Zudem ist eine Anzeigeeinrichtung 36 vorgesehen, mittels welcher insbesondere die mittels der Auswerteeinheit 32 bestimmten Werte oder Daten zur Anzeige gebracht werden können. Die Messeinrichtung 28 und/oder die Auswerteeinheit 32 und/oder die Steuerungseinheit sind bevorzugt in einen Rechner 38 integriert oder Bestandteil desselben, welcher zudem über eine elektrische Leitung 40 mit der Versorgungseinrichtung 26 verbunden ist zur Steuerung und Regelung der Versorgungseinrichtung 26 und somit des Linearantriebs.

In der Ausführungsform der Figur 1 sind Gewicht und Volumen des Verdrängungskörpers 10 derart gewählt, dass dieser in keinem der Fluide schwimmt. Die einzelnen Fluide 4 weisen verschiedene Dichten auf, so dass der Verdrängungskörper 10 unterschiedliche Auftriebskräfte in Abhängigkeit der Dichte des jeweils verdrängten Fluids 4 erfährt. In verschiedenen Fluiden 4 sind somit unterschiedliche Krafteinwirkungen durch den elektromagnetischen Linearantrieb notwendig, um den Verdrängungskörper 10 im Gleichgewicht zu halten oder mit einem bestimmten Vortrieb entlang dem Führungsrohr 12 zu bewegen, sei es nach oben (bevorzugt) oder nach unten. Als Maß für die aufzubringende Kraft kann die Stellgröße des elektromagnetischen Linearantriebs, beispielsweise konkret die Motorspannung oder der Motorstrom des Linearmotors, als Meßgröße genutzt und/oder von der Messeinheit 28 gemessen werden. Aus einer festgestellten oder gemessenen Veränderung des erforderlichen Motorstroms bei einer Verschiebung des Verdrängungskörpers 10 von einer ersten Position (erste Höhe) auf eine zweite Position (zweite Höhe) wird auf die Existenz einer Phasengrenze 20 zwischen den zwei Positionen (Höhen) geschlossen.

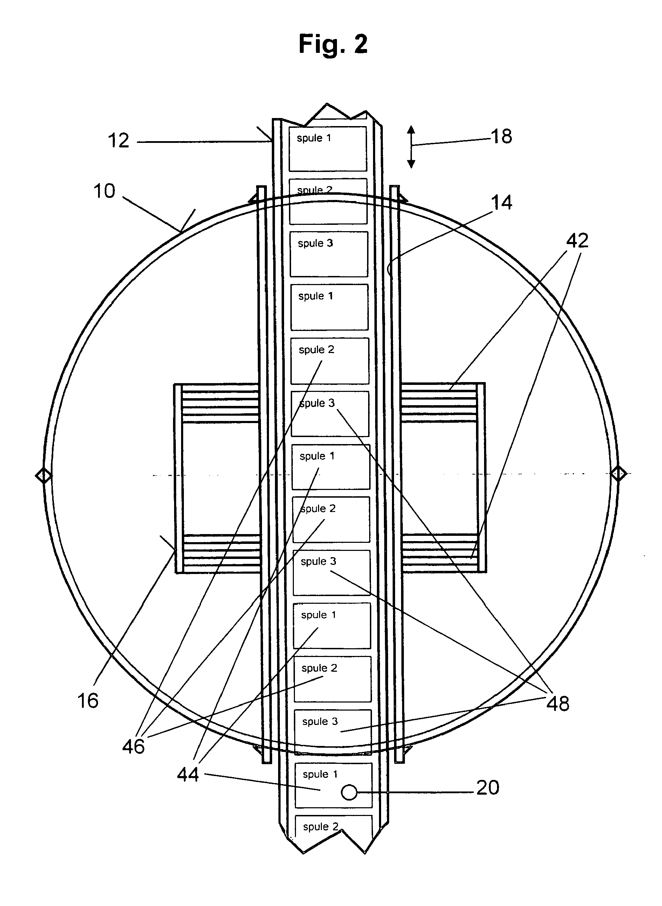

Alternativ zu einer Messung, bei der der Verdrängungskörper kontinuierlich und bevorzugt mit im Wesentlichen konstantem Vorschub entlang dem Führungsrohr bewegt wird, wird insbesondere bei die in den Figuren 1 und 2 gezeigte Ausführungsform ein fester Arbeitspunkt für den Verdrängungskörper 10 zur Feststellung der oberen Phasengrenze eines bestimmten Fluids gewählt oder eingestellt, indem eine bestimmte Zusatzkraft derart aufgebracht wird, dass der Verdrängungskörper in einem bestimmten der vorhandenen Fluide schwimmt. Für den Fall einer Messung von oben nach unten - bevorzugt für stabile Verdrängungskörper mit geringem Auftrieb - sinkt der Verdrängungskörper 10 dann durch die über dem bestimmten Fluid vorhandenen Fluide hindurch, bis er auf dem bestimmten Fluid aufschwimmt. Für den Fall einer Messung von unten nach oben steigt der Verdrängungskörper 10 dann durch die unter dem bestimmten Fluid vorhandenen Fluide und durch das bestimmte Fluid hindurch, bis er auf diesem aufschwimmt. Eine Lagemessung des Verdrängungskörpers 10 kann dann erfolgen, wenn eine stationäre Situation erreicht ist, wenn der Verdrängungskörper 10 eine stationäre Position eingenommen hat.

Die Figur 2 zeigt ein Detail der bevorzugten Ausführungsform der erfindungsgemäßen Vorrichtung: Verdrängungskörper 10 und ein Abschnitt des Führungsrohr 12 sowie Baugruppen eines integrierten Linearmotors. Im Inneren des Verdrängungskörpers 10 befindet sich das Läuferteil 16 des Linearmotors, auch als Anker zu bezeichnen, während im Inneren des Führungsrohrs 12 der Stator 20 des Linearmotors angeordnet und aufgenommen ist. Das Läuferteil 16 ist mit dem Verdrängungskörper 10 fest verbunden, so dass eine auf jenes Läuferteil 16 ausgeübte Kraft den gesamten Verdrängungskörper 10 bewegt. Aufgrund der jeweils gekapselten druckgeschützten und temperaturgestützten Ausführung des Verdrängungskörpers 10 und des Führungsrohrs 12 mit gewissem Spiel weisen Läuferteil 16 und Stator 20 einen im Vergleich zu geläufigen Linearmotoren mit vergleichbaren Parametern großen Abstand auf, konkret kann dieser Abstand größer als 1,5 mm sein. In der bevorzugten Ausführungsform umfasst das Läuferteil 22 des Linearmotors Permanentmagnete 42, so dass eine hohe magnetische Flussdichte in der Umgebung des Läuferteils herrscht, wodurch vorteilhaft eine große Energieübertragung auf das Läuferteil ermöglicht ist. In vorteilhafter Weise ist dadurch ein vergleichsweise geringer Strom für die Bewegung des Läuferteils 16 erforderlich. Der Stator 20 weist eine Abfolge von einzelnen Spulen 44, 46, 48 auf. Die Spulen werden phasenversetzt mit Strom beaufschlagt, wobei in dieser bevorzugten Ausführungsform beispielhaft drei verschiedene Phasenlagen für eine Periode vorgesehen sind. Die Spulen 46 werden um 120 Grad phasenverschoben zu den Spulen 44, und die Spulen 48 wiederum um 120 Grad phasenverschoben zu den Spulen 46 betrieben, wobei die jeweils gleichbezeichneten Spulen dieselbe Phasenlage aufweisen. Offensichtlich ist es prinzipiell nur erforderlich diejenigen Spulen zu betrieben, in deren Wirkungsbereich sich das Läuferteil 16 des Linearmotors befindet. Zwecks Vereinfachung der Ansteuerung der Spulen ist es jedoch bevorzugt, Spulen derselben Phasenlage in Reihe zu schalten, das heißt gemeinsam zu betreiben.

Es wird eine Beaufschlagung der Spulen 44, 46, 48 des Stators 20 entlang dem Führungsrohr 12 derart versetzt vorgenommen, dass die auf das Läuferteil 16 ausgeübte Kraft eine korrelierte Verschiebung des Verdrängungskörpers 10 entlang dem Führungsrohr 12 gemäß Doppelpfeil 18 bewirkt. Die Stärke der Strombeaufschlagung kann einen zeitlichen Verlauf haben, das heißt zeitabhängig variieren. Die Strombeaufschlagung einer der Spulen 44, 46, 48 kann jeweils derart erfolgen, dass Magnetfelder unterschiedlicher Orientierung erzeugt werden. Auf diese Weise kann durch ein Magnetfeld einer ersten Orientierung eine anziehende Wirkung auf die Permanentmagneten 42 des Läuferteils 16 erreicht werden, während durch ein Magnetfeld der zweiten, der ersten entgegengesetzten Orientierung die Permanentmagnete 42 in derselben Position abgestoßen werden. Die Umschaltung der einzelnen Spulen 44, 46, 48 verschiedener Phasenlage kann derart vorgenommen werden, dass das Läuferteil 16 entlang des Führungsrohrs 12 von einigen der Magnetfelder gezogen und von anderen der Magnetfelder gedrückt wird.

Während in verbreiteten Ausführungsformen von Motoren offene Magnete, beispielsweise U-förmige Magnete, zum Einsatz gelangen, sind in der gezeigten Ausführungsform der erfindungsgemäßen Vorrichtung geschlossene oder ringförmige Permanentmagnete 42, hier in Figur 2 konkret zwei, vorgesehen. Die ringförmigen Permanentmagnete 42 können aus Ringstücken, beispielsweise aus zwei Hälften, zusammengesetzt sein. In dieser Ausführungsform sind die Permanentmagnete wicklungsfrei oder spulenlos.

In einer besonderen Ausgestaltung des erfindungsgemäßen Verfahrens kann eine bestimmte Spule in einem Zeitintervall, in welchem sie nicht zum Krafteinwirkung auf den Verdrängungskörper 10 erforderlich ist, zur Messung der Position des Verdrängungskörpers 10 benutzt werden: Eine nicht mit Strom für die Krafteinwirkung beaufschlagte, außer der Phase befindliche Spule kann als eine Sonde für das Magnetfeld des Permanentmagneten 42 des bewegten Läuferteils 16 dienen, so dass ein Messsignal elektrodynamisch erzeugbar ist. Aus der Kenntnis der Lage der Spule in der Abfolge der Spulen 44, 46, 48 ist somit die Position des Verdrängungskörpers 10 zum Messzeitpunkt ermittelbar. Eine derartige Messung erfordert nur einen zeitlichen Aufwand in der Ordnung von Millisekunden.

### BEZUGSZEICHENLISTE

- 2: Behälter
- 4, 5: Fluid
- 6: Höhe von 4 / Abstand zwischen Phasengrenzen
- 8, 9: Trennschicht / Phasengrenze
- 10: Verdrängungskörper
- 12: Führungsrohr / Führungselement
- 14: zentrale Öffnung in 10
- 16: bewegbares Teil / Läufer
- 18: Doppelpfeil
- 20: Stator
- 22: Boden von 12
- 24: elektrische Anschlussleitung
- 26: Versorgungseinrichtung (Spannung, Strom)
- 28: Messeinrichtung
- 30: elektrische Leitung
- 32: Auswerteinheit
- 34: Einrichtung zur Positionsbestimmung
- 36: Anzeigeeinrichtung
- 38: Rechner
- 40: elektrische Leitung
- 42: Permanentmagnet
- 44: Spule
- 46: Spule
- 48: Spule

## Patentansprüche

1. Vorrichtung zur Feststellung der Existenz wenigstens einer Phasengrenze (8, 9) zwischen übereinander geschichteten Fluiden (4, 5), mit einem Verdrängungskörper (10) und einem Führungselement (12), entlang dessen der Verdrängungskörper (10) durch die übereinander geschichteten Fluide (4, 5) unter Passage wenigstens einer Phasengrenze (8, 9) hindurch bewegbar ist,
**dadurch gekennzeichnet,**
**dass** der Verdrängungskörper (10) einen bewegbaren Teil (16) eines elektrischen Linearantriebs zur Krafteinwirkung auf den Verdrängungskörper (10) aufweist und dass das Führungselement (12) einen stationären Teil oder Stator (20) des Linearantriebs aufweist.

2. Vorrichtung gemäß Anspruch 1, **dadurch gekennzeichnet, dass** der elektrische Linearantrieb als elektromagnetischer Linearantrieb oder Linearmotor ausgebildet ist, und/oder dass das Führungselement (12) den Stator (20) des Linearantriebs aufweist, der entlang des Verlaufs des Führungselements angeordnet ist, und dass der Teil (16) des Linearantriebs des Verdrängungskörpers (10) ein Läuferteil des Linearantriebs ist.

3. Vorrichtung gemäß Anspruch 1 oder 2, **dadurch gekennzeichnet, dass** der bewegbare Teil (16) des Linearantriebs wenigstens einen Magneten, insbesondere Permanentmagneten (42) aufweist.

4. Vorrichtung gemäß einem der Ansprüche 1 bis 3, **dadurch gekennzeichnet, dass** der Linearantrieb ein Drehstrommotor und/oder ein Schrittmotor ist.

5. Vorrichtung gemäß einem der Ansprüche 1 bis 4, **dadurch gekennzeichnet, dass** eine Messeinheit (28) zur Erfassung von wenigstens einem elektrischen Parameter, insbesondere Strom oder Spannung, des Linearantriebs vorgesehen ist.

6. Vorrichtung gemäß einem der vorhergehenden Ansprüche, **dadurch gekennzeichnet, dass** eine Energieversorgungsvorrichtung (26) und ferner bevorzugt eine Auswerteinheit (32) und/oder ein Rechner (38) vorgesehen sind.

7. Vorrichtung gemäß einem der vorstehenden Ansprüche, **gekennzeichnet durch** eine Einrichtung (34) zur Bestimmung der Position des Verdrängungskörpers (10), welche bevorzugt in einen Rechner (38) integriert ist.

8. Vorrichtung gemäß einem der vorstehenden Ansprüche, **dadurch gekennzeichnet, dass** der Verdrängungskörper (10) und/oder das Führungselement druckgeschützt und/oder temperaturgeschützt und/oder fluiddicht ausgebildet sind.

9. Vorrichtung gemäß einem der vorstehenden Ansprüche, **dadurch gekennzeichnet, dass** das Führungselement ein Führungsrohr (12) umfasst und/oder dass der Verdrängungskörper (10) wenigstens teilweise das Führungselement (12) umschließt.

10. Verfahren zur Feststellung der Existenz wenigstens einer Phasengrenze (8, 9) zwischen übereinander geschichteten Fluiden (4, 5), in welchem ein Verdrängungskörper (10) entlang eines Führungselements (12) durch die übereinander geschichteten Fluide (4, 5) unter Passage wenigstens einer Phasengrenze (8, 9) hindurch bewegt wird, **dadurch gekennzeichnet**
**dass** mit einer durch einen elektrischen, insbesondere elektromagnetischen Linearantrieb, von dem ein Teil (16) vom Verdrängungskörper (10) umfasst ist, aufgebrachten Kraft auf den Verdrängungskörper (10) eingewirkt wird und dass mittels einer Messeinrichtung (28) wenigstens ein elektrischer Parameter, insbesondere Strom oder Spannung, des Linearantriebs gemessen wird.

11. Verfahren gemäß Anspruch 10, **dadurch gekennzeichnet, dass** aus einer Veränderung der vom elektrischen Linearantrieb für die Erzeugung einer bestimmten Gesamtkraft aufzubringenden Kraft in einem bestimmten Positionsintervall des Verdrängungskörpers (10) auf die Existenz einer Phasengrenze (8, 9) geschlossen wird oder dass bei Feststellung einer stationären Position des Verdrängungskörpers (10) auf die Existenz einer Phasengrenze (8, 9) bei dieser Position des Verdrängungskörpers (10) geschlossen wird.

12. Verfahren gemäß Anspruch 10 oder 11, **dadurch gekennzeichnet, dass** die Position des Verdrängungskörpers (10) mittels einer Messung der Position des vom Verdrängungskörper (10) umfassten Teils (16) des insbesondere elektromagnetischen Linearantriebs bestimmt wird.

13. Verfahren nach einem der Ansprüche 10 bis 12, **dadurch gekennzeichnet, dass** eine Krafteinwirkung auf den Verdrängungskörper (10) einstellbar und/oder vorgebbar und/oder veränderbar ist, bevorzugt mittels einer auf eine Energieversorgungseinrichtung (26) des Linearantriebs einwirkenden Steuereinrichtung.

14. Verfahren nach einem der Ansprüche 10 bis 13, **dadurch gekennzeichnet, dass** durch Vergleich der gemessenen oder bestimmten Werte, insbesondere aufgrund der elektrischen Parameter, mit vorgegebenen oder zuvor gemessenen, insbesondere elektrischen Werten Aussagen über die jeweilige Dichte und/oder Art des wenigstens einen Fluids getroffen werden.

15. Verfahren nach einem der Ansprüche 10 bis 14, **dadurch gekennzeichnet, dass** Positionsmessungen oder Positionsbestimmungen des Verdrängungskörpers (10) durchgeführt werden und in Kombination mit festgestellten Phasengrenzen (8, 9) die Höhen (6) der jeweiligen Fluide bestimmt werden.
